# EUROPEAN PATENT SPECIFICATION

(11) **EP 3 838 561 B1**
(45) Date of publication and mention of the grant of the patent: **04.09.2024**
(21) Application number: 20214353.3
(22) Date of filing: 15.12.2020
(51) Int. Cl.: B29C 65/02, B65B 51/30, B65B 59/00

(54) **METHOD FOR CONTROLLING THE OPERATING PARAMETERS OF A SEALING UNIT OF THE FOLLOWER TYPE**
VERFAHREN ZUR STEUERUNG DER BETRIEBSPARAMETER EINER SIEGELEINHEIT DES NACHLAUFTYPS
PROCÉDÉ DE CONTRÔLE DES PARAMÈTRES DE FONCTIONNEMENT D'UNE UNITÉ DE SCELLAGE DU TYPE SUIVEUR

(30) Priority: 20.12.2019 IT 201900024922
(43) Date of publication of application: 23.06.2021
(73) Proprietor: Azionaria Costruzioni Macchine Automatiche A.C.M.A. S.p.A., 40131 Bologna (IT)
(72) Inventor: MALCHIONDA, Maria Livia, 40141 Bologna (IT); POLIDORI, Domenico, 65126 Pescara (IT)
(74) Representative: Puggioli, Tommaso

(56) References cited:
- EP-A1- 0 718 196
- EP-B2- 0 718 196
- WO-A1-2013/164985

## Description

This invention relates to a method for controlling the operating parameters of a sealing unit of the follower type in a product packing machine. More specifically, the machine is what is known as a "flow-pack" machine, configured for packing products by inserting them into a tubular film at regular intervals and intermittently sealing the tubular film to define separate, sealed wrappers.

As is known, sealers of the follower type comprise a motion-following sealing module movable (with reciprocating motion) along a movement direction parallel and synchronous with the feed direction of the sealing film containing the spaced products to make a succession of transverse sealing lines. The sealing module in turn comprises two sealing elements movable towards and away from each other transversely to the movement direction with a movement that is suitably coordinated with the feed motion of the sealing module so that the sealing elements make a seal during the forward stroke of the sealing module and remain spaced apart from each other during the return stroke to be repositioned at the next zone of the tubular film to be sealed.

Usually, the first sealing element is positioned above a conveyor belt carrying products to be wrapped and already inserted in the tubular film, while the second sealing element is positioned under the conveyor belt so that moving the sealing elements towards each other allows making the aforementioned intermittent transverse seals.

Usually, prior art sealing units are managed by control systems responsible for monitoring and/or determining different operating parameters of the sealing process.

As is known, these control systems allow a user to enter only some of the values of the sealing and/or movement parameters of the mechanical parts, while other parameters remain fixed - that is to say, unchangeable - at the values assigned to them when the machine is made or programmed.

Document WO2013/164985 discloses a making and packaging machine able to adapt the speeds involved (e.g. that of the belt or material or welders) according to the format being produced.

Disadvantageously, these control systems present some drawbacks in terms of flexibility and management of the sealing unit.

The possibility of managing only some of the operating parameters makes the sealing unit relatively inflexible to the need for a format changeover and/or for a rapid change of the material to be sealed.

Moreover, a change of the operating parameters such as, for example, the stroke length of the sealing elements, sealing temperature or sealing speed, is not subject to further checks. That means, in some cases, having to make changes to the mechanics of the sealing unit in order to conform to the needs of the modified operating parameters.

The laws of motion which drive the sealing elements are correlated with a specific optimized setup of the sealing elements and are not easy to modify if other parameters, such as production speed, are changed or in the case of a format changeover.

The sealing units managed by the above mentioned control systems are therefore not easy to reset to different operating parameters, meaning that they are inflexible and require complex reprogramming in the event of operational variations.

The technical purpose of this invention is therefore to provide a method for controlling the operating parameters of a sealing unit of the follower type capable of overcoming the above mentioned disadvantages of the prior art. This invention therefore has for an aim to provide a method for controlling the operating parameters of a sealing unit of the follower type capable of optimizing the performance of the sealing unit.

Another aim of this invention is therefore to provide a method for controlling the operating parameters of a sealing unit of the follower type which makes the sealing unit flexible and quick to adapt to a different format.

The technical purpose indicated and the aims specified are substantially achieved by a method for controlling the operating parameters of a sealing unit of the follower type comprising the technical features described in one or more of the appended claims. Also an object of this invention is a flow-pack machine for packing products and operating in accordance with such a method.

Further features of the invention and its advantages are more apparent in the non-limiting description below, with reference to a preferred embodiment of a method for controlling the operating parameters of a sealing unit of the follower type in accordance with this invention.

The description is set out below with reference to the accompanying drawings which are provided solely for purposes of illustration without restricting the scope of the invention and in which:
- Figures 1A-1D schematically illustrate a sealing unit of the follower type comprising two sealers and two conveyor belts;
- Figures 2A-2B show graphs representing the laws of motion of the sealers;
- Figures 3A-3B show further graphs representing the laws of motion of the sealers.

With reference to the accompanying drawings, the numeral 1 denotes a schematic representation of a sealing unit of the follower type according to this invention.

As shown in the accompanying drawings, the unit 1 comprises two conveyor belts 2, 3 running side by side along a feed direction (indicated by the arrow in the drawings) defining a common feed plane in which the products P, placed at regular intervals in a tubular film wrapper I are fed along a feed direction A in such a way that the wrapper I is periodically sealed in the zones between successive products P.

In the embodiment illustrated in the accompanying drawings, the sealing unit 1 comprises a sealing module which in turn comprises a first and a second sealing element 1a, 1b which face each other.

Looking in more detail, the sealing elements 1a, 1b are movable towards and away from each other along a sealing direction, which in the specific embodiment illustrated in the drawings, is vertical and transverse to the feed direction A, which is horizontal.

Further, in order to define a follower type sealing logic, the sealing module comprising the two sealing elements 1a, 1b is movable with reciprocating motion along the feed path A, being mounted, for example, on a slide carriage. Preferably, also, the unit 1 may be configured in such a way as to keep a substantially constant operating space defined longitudinally between the two conveyor belts 2, 3 for the operating movement of the sealing elements 1a, 1b.

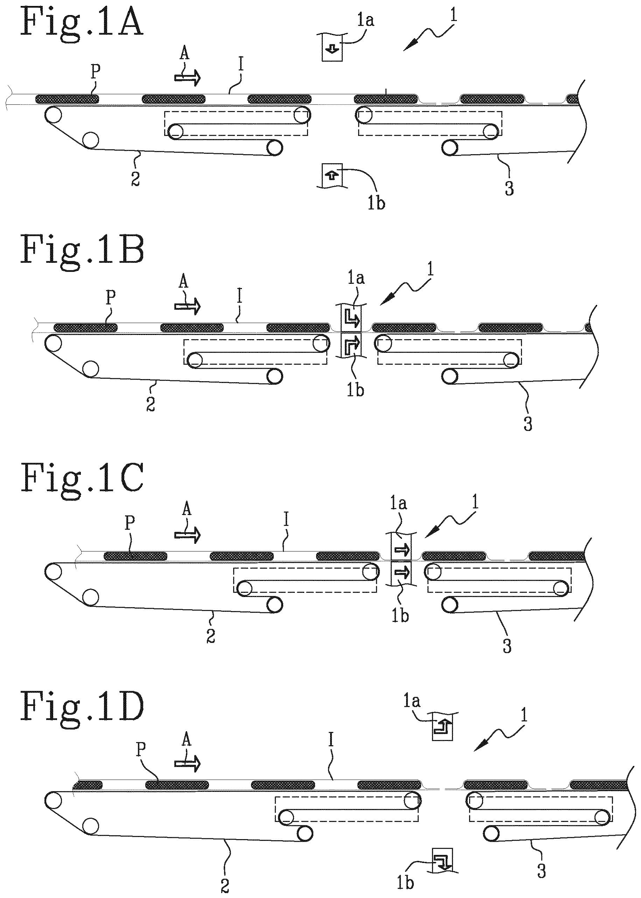

The reciprocating movement of the sealing module along the feed direction A and the to-and-fro (opening and closing) movement of the two sealing elements 1a, 1b is coordinated in such a way as to perform a follower type sealing cycle, as described below with specific reference to the embodiment of Figures 1A-1D (but generalizable to different configurations and/or orientations of the unit 1).

In use, the sealing elements 1a, 1b close in on each other in such a way that a portion of the wrapper I is interposed between them to be sealed along a sealing line that is transverse to the feed direction A. As shown in Figure 1B, during the closing-in movement towards each other, the sealing elements 1a, 1b are moved together with the underlying conveyor belts 2, 3 and together with the products P and with the wrapper I synchronously along the feed direction A (specifically by means of an acceleration ramp along the feed direction A).

Next, as shown in Figure 1C, the sealing elements 1a, 1b remain at the closed position and at the same time are made to advance for a predetermined sealing time along the feed direction A. It is during this step that, for example, thermal or ultrasonic sealing of the film takes place.

After that, the sealing elements 1a, 1b are moved apart and terminate their horizontal stroke by means of a deceleration ramp along the feed direction A. The sealing elements 1a, 1b are then withdrawn simultaneously along the horizontal stroke in the direction opposite to the feed direction of the products P so that another sealing cycle can be repeated.

The sealing unit 1 is thus controlled by a control method in such a way that its operating parameters can be controlled and/or set to optimize the operation of the sealing unit 1 based on the production necessities and operational capabilities of the machine itself.

More in detail, the method for controlling the operating parameters of the sealing unit 1 comprises the step of setting the value of at least one input operating parameter selectable by a user, taking into account the properties of the material to be sealed and/or the size being processed and/or the performance of the machine. In one aspect of the invention, this parameter is selected between a sealing time (that is to say, the time in which the first and the second sealing element 1a, 1b are held together at the closed position to seal a portion of the wrapper I) and a production speed (in terms of production capacity - that is, number of products P wrapped per unit time - or in terms of feed speed of the wrapper and products P on the conveyor belts 2, 3).

In a further possible embodiment of the method, it is possible to set a value both for the sealing time and for the production speed.

Advantageously, the possibility of setting a value for the sealing time allows managing wrappers I made of different kinds of materials with the same sealing unit 1 and controlling the sealing quality and size of the seal. In effect, it is known that variations in the film material, its thickness, density and other film parameters vary the sealing time considered optimal for a good quality seal.

Advantageously, the possibility of setting a value for the sealing time also allows controlling the law of motion of the sealing elements in such a way as to move them towards/away from each other and along the feed direction A in controlled manner according to production requirements.

In a preferred embodiment, the unit 1 and/or the machine comprise a control panel, allowing a user to enter the values of the input operating parameters, and a processor configured for performing the successive steps of the method described below.

After the step of setting the value of one or more input operating parameters, the method also comprises the step of calculating the values of the remaining, unselected operating parameters as a function of the at least one set value, where one or more of the remaining operating parameters may be subject to restrictions connected with the machine architecture or to ranges of admissibility connected with quality issues or other constraints. Preferably, the remaining operating parameters comprise at least one selection from the following parameters: sealing temperature, length of stroke and/or acceleration of the sealing module along the feed path A, length of stroke and/or acceleration of the sealing elements 1a, 1b along the sealing direction, sealing pressure applied by the sealing elements 1a, 1b. Preferably, one or more of the remaining parameters listed above may, instead, form part of the input parameters in addition to the aforementioned sealing time and/or production speed.

The method also comprises a step of checking the calculated values. This step involves checking that the values calculated are compatible with respective reference ranges and/or with the restrictions imposed by the machine architecture.

In other words, therefore, in an initial step of the method, at least one input operating parameter between sealing time and production speed is selected and set. A value is assigned to this parameter. Next, as a function of the value assigned, the values of the remaining operating parameters are calculated.

The step of calculating the remaining operating parameters is carried out by means of a predetermined optimization routine.

The calculated values are then compared with the respective reference ranges and with the restrictions imposed by the machine architecture.

That way, an alert signal can be issued promptly and any inconsistencies between the values and the respective reference ranges can be corrected. If the step of checking returns a result that at least one of the parameters calculated is not compatible with the respective reference ranges and/or with the restrictions, the method comprises the step of recalculating the remaining values using a different optimization routine and/or setting a different value for the at least one input operating parameter. Preferably, in this circumstance, optimization is accomplished by iterating at least the step of calculating (or, if necessary, also the other steps of the method) until the values calculated fall within the respective ranges of reference operating values and/or are compatible with the machine restrictions.

For example, by setting a value of production speed and the sealing time, the processor calculates, as a function of the input operating parameters, the value of the remaining operating parameters, including, for example, the value of the horizontal stroke length of the sealing elements 1a, 1b.

This stroke length value is compared with the maximum stroke length value which the sealing elements 1a, 1b can travel (the maximum value is given, for example, by the restrictions due to the architecture of the machine).

If this value is less than the maximum admissible horizontal stroke length value, then the drive motors of the unit 1 are enabled; otherwise, a request is made (through the control panel) to modify the value of the input operating parameters set previously.

In an embodiment, in the event of inconsistency between the input operating parameter and the respective reference range, a further optimizing calculation may also be performed in order to give a prompt (through the control panel) to suggest an input operating parameter value which is acceptable and which the operator may accept or modify.

In a possible embodiment, if one or more of the calculated values are not acceptable, the method may also comprise a step of prompting a set of acceptable values obtained by automatically correcting the input parameter value.

Preferably, the method also comprises a step of checking the validity of the input parameter value entered in order to verify that the value entered falls within a predetermined and/or pre-stored range of acceptability.

This step of checking may then be followed by a step of issuing another request to enter an input operating parameter value different from the one entered previously.

For example, if the input parameter entered is a value of sealing time that is impossible for the sealing unit 1 to perform, a prompt to enter another value is issued before the remaining unselected operating parameters are calculated. That way, the method is able to alert the operator immediately to the fact that the value entered does not fall within the respective reference range and avoids wasting time to calculate the remaining operating parameters.

In a possible embodiment of the method, the step of setting the value of at least one input operating parameter is preceded by a step in which the format to be processed and/or the type of wrapping material used are set. That way, the reference ranges are automatically changed not only according to the operational capabilities of the sealing unit 1 but also according to the format. More specifically, this is implemented by loading the respective reference ranges and/or restrictions from a memory unit after the operator has selected the specific format and/or material.

Examples of remaining operating parameters influenced by the format processed are the type of film, the spacing between two consecutive seals and the contact pressure between the sealing elements.

The method according to the invention is therefore capable of taking into consideration all the possible variations of the operating parameters of the machine.

Advantageously, the laws of motion of the sealing elements 1a, 1b are processed by the method of the invention each time an operator enters or modifies the input operating parameters of the machine.

The method also allows checking the stroke lengths of the sealing elements 1a, 1b, the speeds and the maximum admissible accelerations before actually starting the machine.

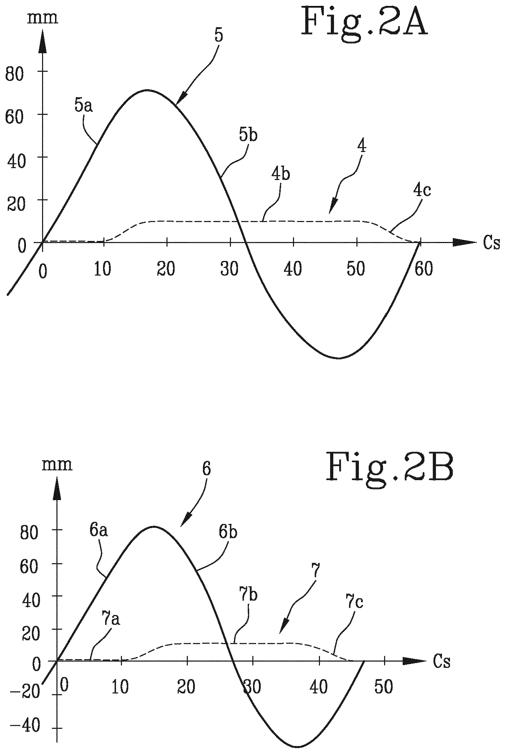

Figures 2A-3B show example applications of the method and represent the movements of the two sealing elements 1a, 1b.

More specifically, the solid line represents the horizontal stroke and the dashed line represents the vertical stroke of the sealing elements 1a, 1b. Figure 2A shows the trend over time of the strokes of the sealing elements 1a, 1b.

In the example application of the method shown in Figure 2A, the input operating parameters set are a production speed of 100 products per minute and a sealing time of 10 cs (0.1 seconds).

The remaining unselected operating parameters are calculated automatically as a function of this setting.

More specifically, with reference to the dashed curve 4, during the first 10 cs, the sealing elements 1a, 1b are at the closed position, where they are close to each other.

In effect, in the first stretch 4a of the curve 4, the value of the vertical stroke is zero for the first 10 cs - that is to say, the sealing elements 1a, 1b are close together to seal the wrapper I - whilst the value of the horizontal stroke is increasing over time, meaning that the sealing elements 1a, 1b are moving in the same direction as the products P.

The initial stretches 4a, 5a of the curves 4, 5 thus represent the moment in which the sealing elements 1a, 1b are close together and are moving translationally along the feed direction A.

In the second stretches 4b, 5b of the curves 4, 5, on the other hand, the sealing elements 1a, 1b move apart until they reach a point where they are as far apart as possible and reverse their motion to move translationally along the horizontal stroke in the direction opposite to the feed direction of the products P until reaching a point of maximum withdrawal, identifiable at around the 50 cs instant (minimum point of curve 5) where they are ready for another sealing cycle.

In effect, as shown by the final stretch 4c of the curve 4, represented by the dashed line, the sealing elements 1a, 1b are once again moved towards each other to seal another portion of the wrapper I.

The distance between the maximum peak and the minimum peak of the solid line 5 indicates the value of the horizontal stroke length of the sealing elements 1a, 1b, which is approximately 125 mm, determined, for example, by the preceding routine as a result of setting the sealing time and the production speed, and which is checked to ensure it is admissible - that is, compatible with the structural features of the machine.

If the value is compatible, the sealing unit 1 is effectively started; otherwise a request to enter different values for the input operating parameters is made or a prompt including the values to be assigned is issued, or again, where possible, the calculation routine is repeated with a different optimization function to obtain a different set of parameters, which are checked again.

In Figure 2B, the trend of the curves 6, 7 is similar to that of Figure 2A but the amplitude of the curve represented by the solid line 6 and the total cycle time are different.

In this case, the production speed setting is higher than the setting for the case represented in Figure 2A, while the welding time is the same. Following the setting of the new values of production speed and sealing time, the operating parameters are recalculated and compared with the respective reference ranges.

In the case of Figure 2B, the horizontal stretch 7b is shorter because to make more products P per minute while keeping the same sealing time, optimal for the material (which is the same as in the previous case, stretch 7a) it was deemed necessary for the sealing module to have a longer horizontal stroke and a higher speed or acceleration along the feed direction A (it is noted, in effect, that in the first stretch 7a, the length in mm travelled in 10 cs along the horizontal stroke is greater than in the case represented in Figure 2A).

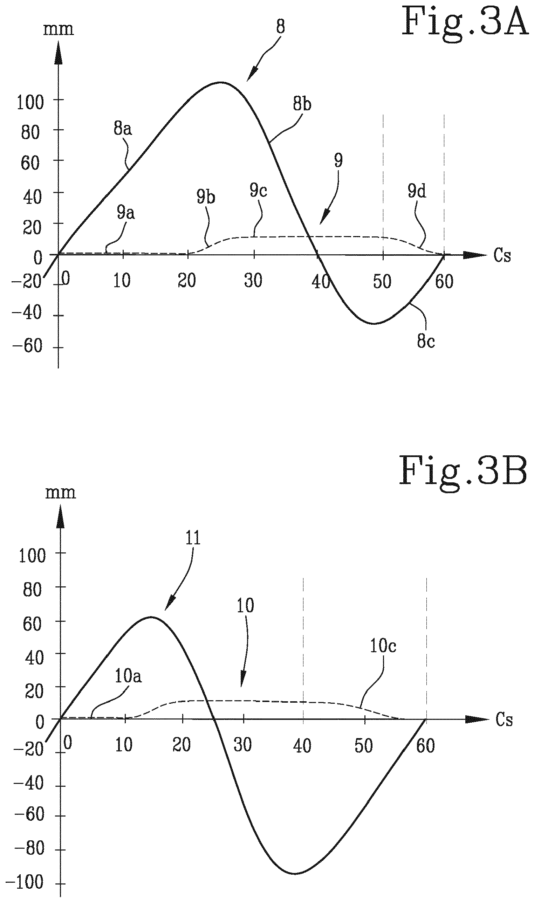

In Figure 3A, the sealing time (20 cs) is twice as long as the previous case and the production speed setting is 100 products per minute. As a result, the horizontal stroke is approximately 156 mm, which is once again subjected to an admissibility check.

The initial stretch 9a of the curve 9, represented by a dashed line, shows that the sealing elements 1a, 1b are close together (thus making the seal) for 20 cs.

The second and last stretches 9b, 9d of the curve 9, on the other hand, show that the sealing elements 1a, 1b perform the movements towards and away from each other in 10 cs each (up and down ramps of the curve).

As in the previous cases, the solid line curve 8 represents the movement logic of the sealing module along the feed direction A.

Figure 3B, on the other hand, shows a curve obtained by setting as input to the machine the sealing time, the production speed and the horizontal stroke of the sealing elements (unchanged compared to the case of Figure 3A). More specifically, these input operating parameters are set to the same values as those in the case of Figure 3A, differing only in that the set sealing time is 50% of the previous sealing time, hence 10 cs.

In this case, to optimize seal quality, the operator can also set at least the closing ramp of the sealing elements 1a, 1b (10c in Figure 3B) so that to ensure a good quality seal, the sealing elements 1a, 1b must make the movement towards each other in 20 cs, instead of 10 cs and then make the seal for 10 cs. However, this closing ramp (10c) may also be an output of the optimization process provided by the routine implemented in the processor.

As they move forward along the horizontal stroke, therefore, the sealing elements 1a, 1b move towards each other more slowly than in the case represented in Figure 3A, so as to ensure greater sealing precision.

As shown by the above examples, it is therefore possible to optimize the operation of the sealing unit 1 based on production requirements.

By parameterizing their strokes, the sealing elements 1a, 1b can be controlled in such a way as to vary their speed and acceleration along the strokes.

The method thus makes it possible to monitor simultaneously all the input parameters of the machine so that the machine operates in the optimum conditions at all times.

The invention achieves the above-mentioned aims by eliminating the drawbacks of the prior art.

The method as described and claimed herein allows parameterizing the strokes of the sealing elements 1a, 1b as a function of the input operating parameters selected.

Another advantage derives from the fact that the laws of motion of the sealing elements 1a, 1b are processed each time the input operating parameters are changed.

Another advantage derives from the fact that the input operating parameters include the sealing time, which allows optimizing the expected sealing quality and controlling the dimensions of the seal itself.

Another advantage is that the method allows obtaining all the possible variations of the operating parameters calculated on the basis of the set parameters so as to optimize the operation of the machine.

## Claims

1. A method for controlling the operating parameters of a sealing unit (1) of the follower type in a product packing machine, wherein the sealing unit (1) comprises a sealing module (1a, 1b) movable with reciprocating motion along a feed path of a tubular film to be sealed, wherein the sealing module comprises two sealing elements which are movable relative to each other along a sealing direction transverse to the feed path, the method being implemented in accordance with a plurality of operating parameters and comprising the following steps:
A. setting the value of at least one input operating parameter selectable at least between sealing time and production speed;
B. calculating the values of the remaining, unselected operating parameters as a function of the at least one set value, wherein one or more of the remaining operating parameters are subject to restrictions connected with the machine architecture;
C. checking that the values calculated are compatible with respective reference ranges and/or with the restrictions,
the method being **characterized in that** the step of calculating the remaining operating parameters is carried out by a control unit using a predetermined optimization routine.

2. The method according to claim 1, wherein the predetermined optimization routine is run by iterating at least the step of calculating until the values calculated fall within the respective ranges of reference operating values and/or are compatible with the restrictions.

3. The method according to one or more of the preceding claims, wherein, if the step of checking returns a result that at least one of the parameters calculated is not compatible with the respective reference ranges and/or with the restrictions, the method comprises a further step of recalculating the remaining values using a different optimization routine and/or setting a different value for the at least one input operating parameter.

4. The method according to one or more of the preceding claims, wherein, between step A and step B, the method comprises a step of checking that the set value of the at least one input operating parameter falls within a predetermined and/or pre-stored acceptance range.

5. The method according to one or more of the preceding claims, wherein the reference ranges and/or the restrictions of at least some of the remaining operating parameters are a function of a format of the product processed in the machine and are automatically changed if a different format is selected, in particular by an operator setting a different format and thus causing the respective reference ranges and/or restrictions to be loaded from a memory unit.

6. The method according to one or more of the preceding claims, wherein the remaining operating parameters comprise one or more of the following parameters:
- sealing temperature;
- stroke length and/or acceleration of the sealing module along the feed path (A);
- stroke length and/or acceleration of the sealing elements (1a, 1b) along the sealing direction;
- sealing pressure applied by the first and the second sealing element (1a, 1b).

7. The method according to one or more of the preceding claims, wherein the step of setting the value of at least one input operating parameter is carried out by also setting at least one shape and/or duration and/or temporal position of an acceleration and/or deceleration ramp of the sealing module along the feed direction.

8. A flow-pack machine for packing products in a tubular film, wherein the machine comprises a sealing unit (1) of the follower type comprising a sealing module (1a, 1b) movable with reciprocating motion along a feed path of a tubular film to be sealed, wherein the sealing module comprises two sealing elements which are movable relative to each other along a sealing direction transverse to the feed path, wherein the machine comprises a control panel configured for entering the at least one input operating parameter and a processor configured for carrying out the steps of the method according to one or more of the preceding claims from 1 to 7.

## Patentansprüche

1. Verfahren zur Steuerung der Betriebsparameter einer Siegeleinheit (1) des Nachlauftyps in einer Produktverpackungsmaschine, wobei die Siegeleinheit (1) ein Siegelmodul (1a, 1b) umfasst, das mit einer Pendelbewegung entlang eines Zuführungswegs einer zu versiegelnden schlauchförmigen Folie bewegbar ist, wobei das Siegelmodul zwei Siegelemente umfasst, die relativ zueinander entlang einer Siegelrichtung, die quer zum Zuführungsweg verläuft, bewegbar sind, wobei das Verfahren im Einklang mit einer Vielzahl von Betriebsparametern durchgeführt wird und die folgenden Schritte umfasst:
A. Festlegen des Werts von mindestens einem Eingabebetriebsparameter, der mindestens aus der Siegelzeit und der Produktionsgeschwindigkeit auswählbar ist;
B. Berechnen der Werte der restlichen, nicht ausgewählten Betriebsparameter als eine Funktion des mindestens einen festgelegten Werts, wobei einer oder mehrere der restlichen Betriebsparameter Einschränkungen in Verbindung mit dem Aufbau der Maschine unterliegen;
C. Prüfen, ob die berechneten Werte mit den jeweiligen Referenzwertebereichen und/oder mit den Einschränkungen vereinbar sind,
wobei das Verfahren **dadurch gekennzeichnet ist, dass** der Schritt zum Berechnen der restlichen Betriebsparameter von einer Steuereinheit durchgeführt wird, die ein vorgegebenes Optimierungsprogramm nutzt.

2. Verfahren nach Anspruch 1, wobei das vorgegebene Optimierungsprogramm durchgeführt wird, indem mindestens der Schritt zum Berechnen wiederholt wird, bis die berechneten Werte unter die jeweiligen Wertebereiche von Referenzbetriebswerten fallen und/oder mit den Einschränkungen vereinbar sind.

3. Verfahren nach einem oder mehreren der vorhergehenden Ansprüche, wobei das Verfahren einen weiteren Schritt zum erneuten Berechnen der restlichen Werte unter Nutzung eines anderen Optimierungsprogramms und/oder unter Festlegung eines anderen Werts von mindestens einem Eingabebetriebsparameter umfasst, wenn der Schritt zum Prüfen ein Ergebnis liefert, dem gemäß mindestens einer der berechneten Betriebsparameter nicht mit den jeweiligen Referenzwertebereichen und/oder den Einschränkungen vereinbar ist.

4. Verfahren nach einem oder mehreren der vorhergehenden Ansprüche, wobei das Verfahren zwischen Schritt A und Schritt B einen Schritt zum Prüfen umfasst, dass der festgelegte Wert des mindestens einen Eingabebetriebsparameters in einen vorgegebenen und/oder vorgespeicherten Akzeptanzbereich fällt.

5. Verfahren nach einem oder mehreren der vorhergehenden Ansprüche, wobei die Referenzwertebereiche und/oder die Einschränkungen von mindestens einigen der restlichen Betriebsparametern eine Funktion eines Formats des in der Maschine verarbeiteten Produkts sind und automatisch geändert werden, wenn ein anderes Format ausgewählt wird, insbesondere von einem Bediener, der ein anderes Format einstellt, wodurch die jeweiligen Referenzwertebereiche und/oder Einschränkungen von einer Speichereinheit geladen werden.

6. Verfahren nach einem oder mehreren der vorhergehenden Ansprüche, wobei die restlichen Betriebsparameter einen oder mehrere der folgenden Parameter umfassen:
- Siegeltemperatur;
- Hublänge und/oder Beschleunigung des Siegelmoduls entlang des Zuführungswegs (A);
- Hublänge und/oder Beschleunigung der Siegelelemente (1a, 1b) entlang der Siegelrichtung;
- vom ersten und vom zweiten Siegelelement (1a, 1b) ausgeübter Siegeldruck.

7. Verfahren nach einem oder mehreren der vorhergehenden Ansprüche, wobei der Schritt zum Festlegen des Werts von mindestens einem Eingabebetriebsparameter auch durch das Einstellen von mindestens einer Form und/oder Dauer und/oder zeitlichen Position einer Beschleunigungs- und/oder Bremsrampe des Siegelmoduls entlang der Zuführungsrichtung durchgeführt wird.

8. Schlauchbeutelmaschine zum Verpacken von Produkten in eine schlauchförmige Folie, wobei die Maschine eine Siegeleinheit (1) des Nachlauftyps umfasst, umfassend ein Siegelmodul (1a, 1b), das mit einer Pendelbewegung entlang eines Zuführungswegs einer zu siegelnden schlauchförmigen Folie bewegbar ist, wobei das Siegelmodul zwei Siegelelemente umfasst, die relativ zueinander entlang einer Siegelrichtung, die quer zum Zuführungsweg verläuft, bewegbar sind, wobei die Maschine ein Bedienpanel umfasst, das ausgelegt ist, um den mindestens einen Eingabebetriebsparameter einzugeben, und einen Prozessor, der ausgelegt ist, um die Schritte des Verfahrens nach einem oder mehreren der vorhergehenden Ansprüche von 1 bis 7 auszuführen.

## Revendications

1. Procédé de contrôle des paramètres de fonctionnement d'une unité de scellage (1) du type suiveur dans une machine d'emballage de produits, dans lequel l'unité de scellage (1) comprend un module de scellage (1a, 1b) mobile avec un mouvement alternatif le long d'un trajet d'alimentation d'un film tubulaire à sceller, dans lequel le module de scellage comprend deux éléments de scellage qui sont mobiles l'un par rapport à l'autre le long d'une direction de scellage transversale au trajet d'alimentation, le procédé étant mis en œuvre conformément à une pluralité de paramètres de fonctionnement et comprenant les étapes suivantes :
A. définir la valeur d'au moins un paramètre de fonctionnement d'entrée sélectionnable au moins entre le temps de scellage et la vitesse de production ;
B. calculer les valeurs des paramètres de fonctionnement non sélectionnés restants en fonction de l'au moins une valeur de consigne, dans lequel un ou plusieurs des paramètres de fonctionnement restants sont soumis à des restrictions liées à l'architecture de la machine ;
C. vérifier que les valeurs calculées sont compatibles avec les plages de référence respectives et/ou avec les restrictions,
le procédé étant **caractérisé en ce que** l'étape de calculer les paramètres de fonctionnement restants est effectuée par une unité de commande utilisant une routine d'optimisation prédéterminée.

2. Procédé selon la revendication 1, dans lequel la routine d'optimisation prédéterminée est exécutée en itérant au moins l'étape de calculer jusqu'à ce que les valeurs calculées se situent dans les plages respectives de valeurs de fonctionnement de référence et/ou soient compatibles avec les restrictions.

3. Procédé selon une ou plusieurs des revendications précédentes, dans lequel, si l'étape de vérifier renvoie un résultat selon lequel au moins l'un des paramètres calculés n'est pas compatible avec les plages de référence respectives et/ou avec les restrictions, le procédé comprend une étape supplémentaire de recalculer les valeurs restantes en utilisant une routine d'optimisation différente et/ou en définissant une valeur différente pour le ou les paramètres de fonctionnement d'entrée.

4. Procédé selon une ou plusieurs des revendications précédentes, dans lequel, entre l'étape A et l'étape B, le procédé comprend une étape de vérifier que la valeur de consigne de l'au moins un paramètre de fonctionnement d'entrée se situe dans une plage d'acceptation prédéterminée et/ou prémémorisée.

5. Procédé selon une ou plusieurs des revendications précédentes, dans lequel les plages de référence et/ou les restrictions d'au moins certains des paramètres de fonctionnement restants sont fonction d'un format du produit traité dans la machine et sont automatiquement modifiées si un format différent est sélectionné, en particulier par un opérateur définissant un format différent et provoquant ainsi le chargement des plages de référence et/ou des restrictions respectives à partir d'une unité de mémoire.

6. Procédé selon une ou plusieurs des revendications précédentes, dans lequel les paramètres de fonctionnement restants comprennent un ou plusieurs des paramètres suivants :
- température de scellage ;
- longueur de course et/ou accélération du module de scellage le long du trajet d'alimentation (A) ;
- longueur de course et/ou accélération des éléments de scellage (1a, 1b) le long de la direction de scellage ;
- pression de scellage appliquée par le premier et le second élément de scellage (1a, 1b).

7. Procédé selon une ou plusieurs des revendications précédentes, dans lequel l'étape de définir la valeur d'au moins un paramètre de fonctionnement d'entrée est effectuée en définissant également au moins une forme et/ou une durée et/ou une position temporelle d'une rampe d'accélération et/ou de décélération du module de scellage le long de la direction d'alimentation.

8. Machine flow-pack pour emballer des produits dans un film tubulaire, dans laquelle la machine comprend une unité de scellage (1) du type suiveur comprenant un module de scellage (1a, 1b) mobile avec un mouvement alternatif le long d'un trajet d'alimentation d'un film tubulaire à sceller, dans laquelle le module de scellage comprend deux éléments de scellage qui sont mobiles l'un par rapport à l'autre le long d'une direction de scellage transversale au trajet d'alimentation, dans laquelle la machine comprend un panneau de commande configuré pour saisir l'au moins un paramètre de fonctionnement d'entrée et un processeur configuré pour réaliser les étapes du procédé selon une ou plusieurs des revendications précédentes de 1 à 7.
